# EUROPÄISCHE PATENTSCHRIFT

(11) **EP 3 224 180 B1**
(45) Veröffentlichungstag und Bekanntmachung des Hinweises auf die Patenterteilung: **09.01.2019**
(21) Anmeldenummer: 15784057.0
(22) Anmeldetag: 22.10.2015
(51) Int. Cl.: B66B 7/04

(54) **AUFZUGANLAGE MIT EINER AUSGLEICHSEINRICHTUNG SODASS EINE ERSTE ROLLE BEI RUHENDER AUFZUGSKABINE WEITGEHEND ENTLASTET IST**
LIFT INSTALLATION HAVING A COMPENSATING DEVICE, SO THAT A FIRST ROLLER IS LARGELY RELIEVED OF LOADING WHEN THE LIFT CAR IS AT REST
INSTALLATION D'ASCENSEUR COMPRENANT UN DISPOSITIF DE COMPENSATION DE SORTE QU'UN PREMIER ROULEAU EST EN GRANDE PARTIE DÉCHARGÉ LORSQUE LA CABINE D'ASCENSEUR EST À L'ARRÊT

(30) Priorität: 25.11.2014 DE 102014017357
(43) Veröffentlichungstag der Anmeldung: 04.10.2017
(73) Patentinhaber: thyssenkrupp Elevator AG, 45143 Essen (DE); thyssenkrupp AG, 45143 Essen (DE)
(72) Erfinder: LÖSER, Friedrich, 85521 Riemerling (DE); JETTER, Markus, 70794 Filderstadt (DE)
(74) Vertreter: thyssenkrupp Intellectual Property GmbH
(86) Internationale Anmeldenummer: PCT/EP2015/074459
(87) Internationale Veröffentlichungsnummer: WO 2016/083032

(56) Entgegenhaltungen:
- JP-A- S5 574 981
- JP-A- S5 628 178
- JP-A- S61 226 485
- JP-A- 2005 138 912

## Beschreibung

Die Erfindung betrifft eine Aufzuganlage mit einer dezentralen Vorrichtung zum Halten der Aufzugkabine. Derartige Aufzuganlagen sind beispielsweise aus der EP 1 772 413 und der EP 1 818 305 bekannt. Bei einer dezentralen Vorrichtung zum Halten der Aufzugkabine wird die Haltekraft nicht zentral in die Aufzugkabine eingebracht. Das bedeutet, dass die Haltekraft weder entlang einer Schwerpunktlinie (vertikale Linie, die den Schwerpunkt beinhaltet) noch in der geometrische Mitte bzw. entlang einer entsprechenden vertikalen Linie eingebracht wird.

Die Aufzuganlagen umfassen hierbei eine entlang einer Führungsschiene bewegliche Aufzugkabine mit mindestens einen ersten Rollenpaar und einem zweites Rollenpaar. Dabei verläuft die Führungsschiene zwischen den beiden Rollen des ersten Rollenpaares und zwischen den beiden Rollen des zweiten Rollenpaares. Weiterhin weist die Aufzugsanlage eine Vorrichtung auf, um die Aufzugkabine mit einer Haltekraft zu beaufschlagen. Hierdurch kann die Aufzugkabine einer ruhenden Position gehalten werden, um Passagieren den Ein- und Ausstieg zu ermöglichen. Alternativ kann die ruhende Position auch eine Parkposition sein.

Bei Aufzugsanlagen mit einer dezentralen Aufhängung kann die Vorrichtung ein Tragseil und eine Treibscheibe aufweisen, wobei das Tragseil die Aufzugkabine über die Treibscheibe mit einem Gegengewicht verbindet. Alternativ kann die Vorrichtung zum Halten der Aufzugkabine auch als ein Linearmotor ausgeführt sein. Bei einer weiteren Variante kann die Vorrichtung auch als eine Feststellbremse ausgeführt sein.

Bei einer dezentralen Aufhängung der Aufzugkabine liegt zwischen dem Angriffspunkt der Haltekraft und dem Schwerpunkt der Aufzugkabine ein horizontaler Versatz vor. Dies führt dazu, dass ein erstes Drehmoment auf die Aufzugkabine wirkt. Das erste Drehmoment würde zu einem Verkippen der Aufzugkabine führen.

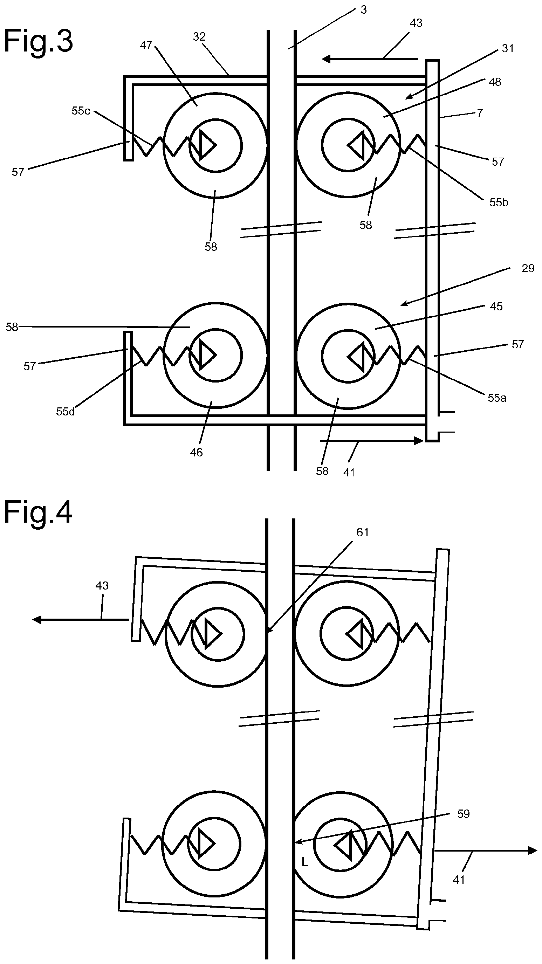

Es ist bekannt kompensierende Kräfte von der Führungsschiene über die Rollen auf die Aufzugkabine zu übertragen. Dies führt jedoch zu einer starken Belastung der Rollen. Mit Bezug auf die Figuren 3 und 4 ist dies ausführlich erläutert. Während der Bewegung der Aufzugkabine wird die gesamte Lauffläche der Rollen durch diese Belastung beansprucht. Bei ruhender Aufzugkabine (z.B. während eines Haltes oder in einer nächtlichen Parkposition) wirkt die Belastung dagegen über einen längeren Zeitraum auf einen ortsfesten Kontaktbereich zwischen Rolle und Führungsschiene. Dies führt zu einer plastischen Verformung der Rollen, insbesondere wenn diese an der Lauffläche ein weiches, dämpfendes Material aufweisen. Aus diesem Grund wurden entsprechende Aufzuganlagen mit einer dezentralen Haltevorrichtung bislang nur für den Bereich niedriger bis mittlerer Höhen (low to mid rise applications) und bis zu mittleren Geschwindigkeiten (low to medium speed) eingesetzt. Bei diesen Anwendungen ist einerseits die Nutzlast kleiner, so dass eine geringere Belastung über die Rollen übertragen wird, und andererseits kann ein härteres Rollenmaterial verwendet werden. Je härter das Rollenmaterial ist, desto geringer ist die plastische Verformung durch die Belastung der Rollen im Stillstand. Ein härteres Rollenmaterial führt gerade bei hohen Geschwindigkeiten jedoch zu eine deutlichen Geräuschentwicklung. Außerdem führt die geringe Dämpfung des härteren Rollenmaterials zu einem unruhigen Fahrtverhalten, da relativ viele Vibrationen auf die Aufzugkabine übertragen werden. Ein weiches Rollenmaterial mit einer guten Dämpfung unterliegt jedoch stärkeren plastischen Verformungen, die wiederum zu einer starken Geräuschentwicklung und einem unruhigen Fahrtverhalten führen. Daher können Rollen mit einem weichen Rollenmaterial entweder nur bei geringen Nutzlasten verwendet werden oder die Rollen müssen entsprechend häufig getauscht werden.

Aufgabe der vorliegenden Erfindung ist es, diese Nachteile zu überwinden.

Diese Aufgabe wird dadurch gelöst, dass die Aufzugkabine mindestens eine erste Ausgleichseinrichtung aufweist, um bei ruhender Aufzugkabine die Führungsschiene derart mit einer Kraft zu beaufschlagen, dass sich ein zweites Drehmoment ergibt, das das erste Drehmoment weitgehend kompensiert, so dass eine erste Rolle des ersten Rollenpaares bei ruhender Aufzugkabine weitgehend entlastet ist.

Dadurch, dass die kompensierende Kraft im Stillstand nun nicht mehr über die erste Rolle sondern über die Ausgleichseinrichtung übertragen wird, können die plastischen Verformungen trotz der Verwendung von weichem Rollenmaterial stark reduziert werden.

Unter einer weitgehenden Entlastung einer Rolle durch eine Ausgleichseinrichtung wird im Sinne dieser Anmeldung verstanden, dass die Kraft, die über die Rolle auf die Führungsschiene übertragen wird, kleiner ist als 20%, bevorzugt kleiner 10%, der übertragenen Kraft ohne Einsatz der Ausgleichseinrichtung. Da die Ausgleichseinrichtung nur bei ruhender Aufzugskabine zum Einsatz kommt, bedeutet dies, dass die auf die Rolle wirkende Kraft bei ruhender Aufzugkabine kleiner ist als 20% der Kraft, die bei bewegter Aufzugkabine auf die Rolle wirkt.

Unter einer weitgehenden Kompensierung des ersten Drehmoments durch ein zweites Drehmoment wird im Sinne dieser Anmeldung verstanden, dass der Betrag der Summe beider Drehmomente kleiner ist als 20%, bevorzugt kleiner 10%, des Betrages des ersten Drehmoments.

Bei einer weitergebildeten Ausführungsform umfasst die Ausgleichseinrichtung mindestens einen Aktor. Hierbei kann es sich beispielsweise um einen Hydraulik- oder Pneumatik-Aktor oder einen elektromagnetischen Aktor handeln. Ein Aktor hat den Vorteil, dass mit einem einfachen elektrischen Steuersignal eine mechanische Verschiebung und damit ein Kraftübertrag bereitgestellt werden kann.

Insbesondere weist der Aktor einen vordefinierten Stellweg auf. Unter einem Stellweg wird die Längenausdehnung des Aktors aufgrund des Steuersignales verstanden. Bei einem vordefinierten Stellweg ist durch die Bauweise des Aktors festgelegt, dass der Aktor eine feste Längenausdehnung bereitstellt. Im Gegensatz zu einem regelbaren Aktor, bei dem die Länge des Stellwegs durch das Steuersignal ausgewählt werden kann, hat der Aktor mit einem vordefinierten Stellweg nur einen aktivierten und einen deaktivierten Zustand. Derartige Aktoren sind kostengünstiger und einfacher anzusteuern, da kein Regelsignal erforderlich ist.

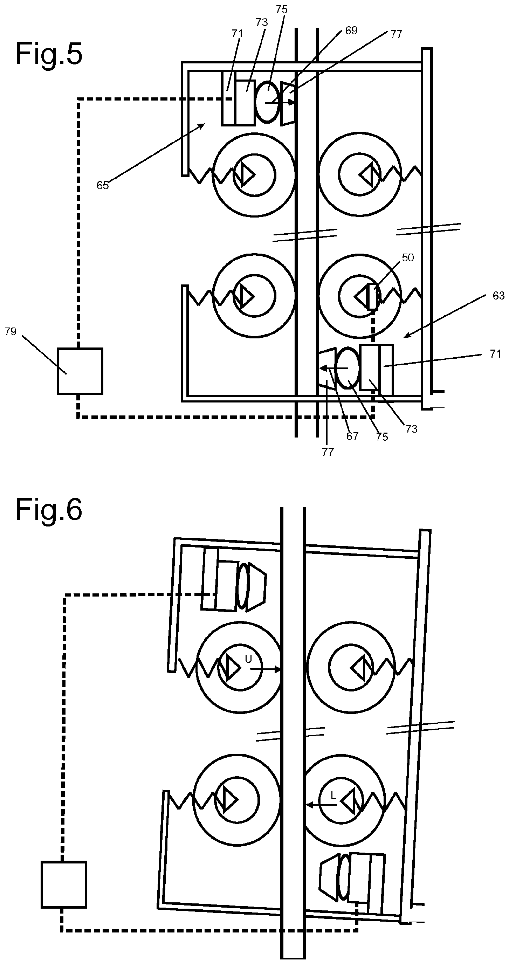

Bei einer besonderen Variante der Aufzuganlage ist die erste Rolle des ersten Rollenpaares über ein elastisches Verbindungsglied mit einer Halterung verbunden ist und der Aktor weist einen vordefinierten Stellweg auf, der an die Steifigkeit des elastischen Verbindungsgliedes angepasst ist. Je nach Steifigkeit des elastischen Verbindungsgliedes führt das erste Drehmoment bei ruhender Aufzugkabine (und abgeschalteter Ausgleichsvorrichtung) zu einem mehr oder weniger starken Verkippen der Aufzugkabine. Beim Verkippen der Aufzugkabine wird das elastische Verbindungsglied komprimiert bis die Rückstellkraft gerade ein kompensierendes Drehmoment erzeugt. Bei einer hohen Steifigkeit ist die nötige Rückstellkraft bereits nach einer kurzen Komprimierungswegstrecke erreicht, während bei einer niedrigen Steifigkeit eine längere Wegstrecke erforderlich ist. Durch den Aktor der Ausgleichseinrichtung wird das Verkippen der Aufzugkabine rückgängig gemacht, wie anhand der Figuren 4 und 5 deutlich wird. Bei einer größeren Verkippung ist auch ein längerer Stellweg des Aktors erforderlich. Somit hängt der Stellweg des Aktors von der Steifigkeit des elastischen Verbindungsgliedes ab. Die Anpassung des Stellweges an die Steifigkeit hat den Vorteil, dass die Einstellung nur einmalig (beziehungsweise nur bei Wartungsintervallen) durchgeführt muss. Es ist keine aufwendige Kontrolle und Regelung des Aktors im Betrieb erforderlich.

Bei einer alternativen Ausführungsform ist der Stellweg des Aktors dagegen regelbar. Dies ermöglicht eine flexible Ansteuerung. Auch bei Veränderungen der Aufzuganlage über die Lebensdauer kann der Aktor optimal angesteuert werden. Somit lassen sich zum Beispiel Veränderungen des Rollenradius durch Temperatur oder Verschleiß problemlos kompensieren.

Bei einer weitergebildeten Variante der Aufzuganlage weist die Vorrichtung eine Feststellbremse auf, in die die Ausgleichseinrichtung integriert ist. Hierdurch kann die Anzahl der Komponenten reduziert werden, da die Aufgabe der Ausgleichseinrichtung durch die Feststellbremse mit wahrgenommen wird. Es ist keine separate Ausgleichseinrichtung erforderlich.

Die Feststellbremse weist hierbei insbesondere zwei Bremsbacken auf, die bei aktiver Feststellbremse von entgegengesetzten Seiten an der gleichen Vertikalposition auf die Führungsschiene entgegengesetzte Andrückkräfte ausüben. Dabei wirken die zwei Bremsbacken mit unterschiedlichen Andrückkräften auf die Führungsschiene, so dass die Kraft als resultierende Kraft der beiden unterschiedlichen Andrückkräfte verbleibt. Auf diese Weise wird ohne zusätzliche Komponenten ein zweites Drehmoment erzeugt, das das erste Drehmoment weitgehend kompensiert.

Um sicherzustellen, dass die kompensierende Kraft im Wesentlichen über die Bremsbacke der Feststellbremse und nicht über eine Rolle übertragen wird, ist die Aufzugsanlage derart mechanisch ausgebildet, die erste Rolle über ein elastisches Verbindungsglied mit einer Halterung verbunden ist und eine erste Bremsbacke der zwei Bremsbacken auf der gleichen Seite der Führungsschiene angeordnet ist wie die erste Rolle. Hierbei ist die erste Bremsbacke über ein elastisches Element mit einer Fassung verbunden ist, wobei das elastische Element eine höhere Steifigkeit aufweist als das elastische Verbindungsglied. Die Kraft wird somit im Wesentlichen über das Element mit der höheren Steifigkeit übertragen und daher über die erste Bremsbacke und nicht über die erste Rolle.

Bei einer weitergebildeten Ausführungsform umfasst die Aufzuganlage eine Steuerung, wobei die Ausgleichseinrichtung mit der Steuerung in Signalverbindung steht. Bei jedem Halt kann somit die Aufzugsteuerung ein Signal an die Ausgleichseinrichtung geben, um die Entlastung der ersten Rolle zu bewirken. Die Signalverbindung kann beispielsweise durch eine Kabelverbindung oder eine Funkverbindung realisiert werden.

Eine besondere Variante der Aufzuganlage zeichnet sich dadurch aus, dass die Aufzugkabine einen Tragrahmen und eine Innenkabine umfasst, wobei zwischen der Innenkabine und dem Tragrahmen mindestens ein Gewichtssensor zur Bestimmung der Gewichtskraft der Aufzugkabine angeordnet ist. Mittels des Gewichtssensors kann somit die Nutzlast und damit der Wert des ersten Drehmoments bestimmt werden. Insbesondere umfasst bei dieser Variante die erste Ausgleichseinrichtung eine Steuereinheit, die mit dem Gewichtssensor und der Ausgleichseinrichtung in Signalverbindung steht, um aus dem Signal des Gewichtssensors ein Steuersignal für die Ausgleichseinrichtung zu generieren. Beispielsweise wird bei dieser Variante der Stellweg des Aktors optimal an die Nutzlast und damit an den Wert des ersten Drehmoments angepasst.

Bei einer weiteren Variante weist die erste Rolle einen Sensor zur Bestimmung der über die erste Rolle übertragenen Kraft aufweist. Auf diese Weise wird kann direkt gemessen werden, ob eine erfolgreiche Entlastung der ersten Rolle stattfindet. Zusätzlich zu einer reinen Überprüfung kann das Sensorsignal auch zur Regelung der Kraft verwendet werden. Hierzu umfasst die erste Ausgleichseinrichtung eine Steuereinheit, die mit dem Sensor in Signalverbindung steht, um aus dem Signal des Sensors ein Steuersignal für die Ausgleichseinrichtung zu generieren. Beispielsweise wird der Stellweg des Aktors solange vergrößert bis die erste Rolle vollständig entlastet ist.

Bei einer weitergebildeten Ausführungsvariante weist die Aufzugkabine eine zweite Ausgleichseinrichtung auf, um bei ruhender Aufzugkabine die Führungsschiene derart mit einer Kraft zu beaufschlagen, dass sich ein zweites Drehmoment ergibt, das das erste Drehmoment weitgehend kompensiert, so dass mindestens eine erste Rolle des zweiten Rollenpaares bei ruhender Aufzugkabine weitgehend entlastet ist. Hierbei weisen die erste Ausgleichseinrichtung und die zweite Ausgleichseinrichtung einen vertikalen Versatz zueinander auf. Insbesondere sind die beiden Ausgleichseinrichtungen derart angeordnet sind, dass die Kräfte, mit denen die Ausgleichseinrichtungen die Führungsschiene beaufschlagen können, entgegengerichtet sind.

Die erfindungsgemäße Aufgabe wird ebenfalls gelöst durch ein Verfahren zum Betrieb einer Aufzuganlage mit einer entlang einer Führungsschiene beweglichen Aufzugkabine umfassend mindestens erstes Rollenpaar und ein zweites Rollenpaar. Dabei verläuft die Führungsschiene zwischen den beiden Rollen des ersten Rollenpaares und zwischen den beiden Rollen des zweiten Rollenpaares. Außerdem weist die Aufzugsanlage eine Vorrichtung auf, um die Aufzugkabine mit einer Haltekraft zu beaufschlagen, wobei zwischen dem Angriffspunkt der Haltekraft und dem Schwerpunkt der Aufzugkabine ein horizontaler Versatz vorliegt, so dass ein erstes Drehmoment auf die Aufzugkabine wirkt. Bei ruhender Aufzugkabine wird die Führungsschiene derart durch eine Ausgleichsvorrichtung der Aufzugkabine mit einer Kraft beaufschlagt, dass sich ein zweites Drehmoment ergibt, das das erste Drehmoment kompensiert, so dass mindestens eine erste Rolle des ersten Rollenpaares weitgehend entlastet ist. Die Vorteile dieses Verfahrens sind vorstehend mit Bezug auf die Vorrichtung erläutert. Zusätzlich wird bei fahrender Aufzugkabine die Führungsschiene nicht mehr durch die Ausgleichsvorrichtung der Aufzugkabine mit einer Kraft beaufschlagt, so dass die das erste Drehmoment kompensierenden Kräfte über die Rollen des ersten und zweiten Rollenpaares von der Führungsschiene auf die Aufzugkabine übertragen werden.

Im Folgenden wird die Erfindung anhand von Zeichnungen näher erläutert. Im Einzelnen zeigen:
Fig. 1 eine schematische Ansicht eine Aufzuganlage gemäß dem Stand der Technik
Fig. 2 eine schematische Ansicht eine Aufzuganlage gemäß dem Stand der Technik
Fig. 3 eine vergrößerte Darstellung einer Rollenführung in einem Idealzustand
Fig. 4 eine vergrößerte Darstellung einer Rollenführung in einem realen Zustand
Fig. 5 eine vergrößerte Darstellung einer Rollenführung bei ruhender Aufzugkabine
Fig. 6 eine vergrößerte Darstellung einer Rollenführung bei fahrender Aufzugkabine
Fig. 7 eine Detaildarstellung einer Ausgleicheinrichtung
Fig.8 eine Darstellung einer Ausführungsform einer Ausgleicheinrichtung

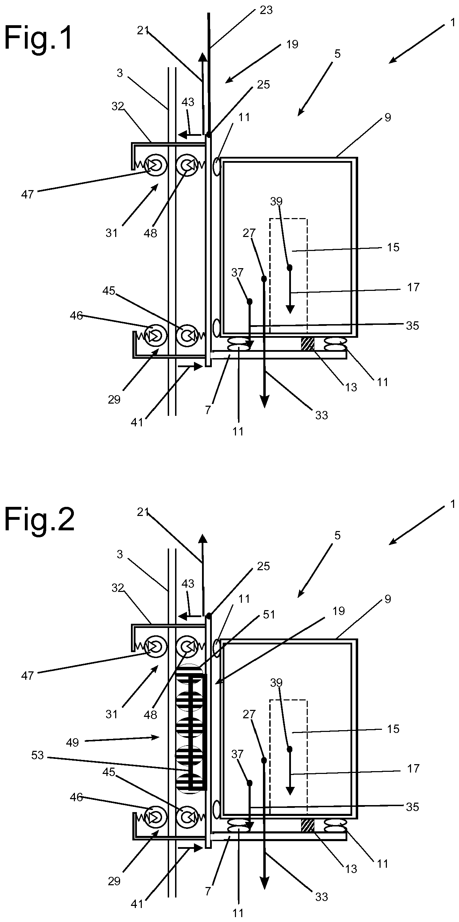

Figur 1 zeigt eine schematische Darstellung einer Aufzuganlage 1. Die Aufzuganlage 1 umfasst eine Führungsschiene 3 und eine Aufzugkabine 5. Die Aufzugkabine 5 ist entlang der Führungsschiene 3 beweglich angeordnet. Hierzu umfasst die Aufzugkabine 5 ein erstes Rollenpaar 29 und ein zweites Rollenpaar 31, wobei die Führungsschiene 3 zwischen den beiden Rollen des ersten Rollenpaares 29 und zwischen den beiden Rollen des zweiten Rollenpaares 31 verläuft. Die beiden Rollenpaare 29 und 31 sind innerhalb eines Rollengehäuses 32 angeordnet.

Weiterhin umfasst die Aufzugkabine 5 einen Tragrahmen 7, der eine Innenkabine 9 trägt. Die Gewichtskraft 33 der Aufzugkabine 5 setzt sich zusammen aus der Gewichtskraft 35 der leeren Aufzugkabine 5 und der Gewichtskraft 17 der Nutzlast. Dabei greift die Gewichtskraft 35 der leeren Aufzugkabine 5 am Schwerpunkt 37 der leeren Aufzugkabine an und die Gewichtskraft 17 der Nutzlast 15 am Schwerpunkt 39 der Nutzlast 15. Die Gewichtskraft 33 der beladenen Aufzugkabine 5, die die Summe Gewichtskräfte 17 und 35 ist, greift am Schwerpunkt 27 der beladenen Aufzugkabine 5 an.

Zwischen Innenkabine 9 und Tragrahmen 7 sind Dämpfungselemente 11 und ein Gewichtssensor 13 angeordnet. Mit dem Gewichtssensor 13 kann die Gewichtskraft 17 der Nutzlast 15 bestimmt werden. Verbunden mit dem Tragrahmen 7 ist eine Vorrichtung 19, die die Aufzugskabine mit einer Haltekraft 21 beaufschlagt. Die Vorrichtung 19 umfasst ein Tragseil 23, das die Aufzugkabine 5 über eine Treibscheibe mit einem Gegengewicht verbindet.
Zwischen dem Angriffspunkt 25 der Haltekraft 21 und dem Schwerpunkt 27 der beladenen Aufzugkabine 5 liegt ein horizontaler Versatz vor, so dass ein erstes Drehmoment auf die Aufzugkabine wirkt. Dieser Versatz ist typisch bei Aufzuganlagen mit dezentraler Vorrichtung 19 zum Halten der Aufzugkabine 5. Zum Halten der Aufzugkabine 5 in einer stabilen Position muss das erste Drehmoment kompensiert werden. Hierzu ist es bekannt kompensierende Kräfte 41 und 43 über eine erste Rolle 45 des ersten Rollenpaares 29 aufzunehmen und eine erste Rolle 47 des zweiten Rollenpaares 31 von der Führungsschiene 3 auf die Aufzugkabine 5 zu übertragen. Dies wird unten mit Hilfe der Figuren 3 und 4 erläutert.

Die Aufzuganlage 1 ist als sogenannte Rucksack-Konfiguration ausgeführt. Dabei sind Führungsschienen lediglich auf einer Seite der Aufzugkabine 5 angeordnet. Aufgrund der Darstellung zeigt Figur 1 nur eine Führungsschiene 3. Eine zweite Führungsschiene ist auf der gleichen Seite der Aufzugkabine 5 versetzt angeordnet. Die Aufzugkabine umfasst entsprechend ausgeführte dritte und vierte Rollenpaare, zwischen denen die zweite Führungsschiene verläuft.

Figur 2 zeigt eine schematische Darstellung einer alternativen Aufzuganlage 1. Im Unterschied zu Figur 1 ist die Vorrichtung 19, die die Aufzugskabine mit einer Haltekraft 21 beaufschlagt, als ein Linearmotor 49 ausgeführt. Der Linearmotor 49 umfasst ein stationäre Komponente 51, die sich entlang der Führungsschiene 3 erstreckt und eine mobile Komponente 53, die mit der Aufzugkabine 5 verbunden ist. Mithilfe des Linearmotors 49 wird die Aufzugkabine 5 entlang der Führungsschiene 3 bewegt. Außerdem kann die Aufzugkabine 5 mithilfe des Linearmotors 45 mit einer Haltekraft 21 beaufschlagt werden, um die Aufzugkabine 5 in einer stabilen Position zu halten.

Figur 3 zeigt eine vergrößerte Darstellung des ersten und zweiten Rollenpaares 29, 31 aus Figur 1. Das erste Rollenpaar 29 umfasst eine erste Rolle 45 und eine zweite Rolle 46. Das zweite Rollenpaar 31 umfasst eine erste Rolle 47 und ein zweite Rolle 48. Zwischen der ersten und der zweiten Rolle der Rollenpaare 29, 31 verläuft die Führungsschiene 3.
Alle vier Rollen 45, 46, 47 und 48 sind jeweils über ein elastisches Verbindungsglied 55 mit einer Halterung 57 verbunden. Figur 3 zeigt eine idealisierte Darstellung bei der keine Haltekraft und keine Gewichtskraft anliegt, so dass kein erstes Drehmoment wirkt. Folglich sind die kompensierenden Kräfte 41 und 43 gleich Null und es stellt sich ein Gleichgewichtszustand ein, bei dem über alle elastischen Verbindungsgliedern 55 die gleiche Kraft übertragen wird, wobei die Kräfte an sich gegenüberliegenden Rollen entgegengesetzt sind. Diese Kraft ergibt sich aufgrund einer Vorspannung der elastischen Verbindungsglieder 55. Hierdurch wird sichergestellt, dass die Rollen 45, 46, 47 und 48 sicher an der Führungsschiene 3 anliegen.

Alle vier Rollen 45, 46, 47 und 48 weisen an der ihrer Lauffläche ein Material auf, das Vibration und Geräusche dämpft. Dies ist beispielhaft eine Elastomerbeschichtung 58.

Figur 4 zeigt die gleiche Konfiguration, wobei eine Haltekraft und eine Gewichtskraft anliegt, so dass ein erstes Drehmoment wirkt. Es kommt somit zu einem Verkippen der Aufzugkabine bis die elastischen Verbindungsglieder 55a und 55c soweit verformt sind, dass die elastischen Verbindungsglieder 55a und 55c ausreichende kompensierende Kräfte 41 und 43 erzeugen, die das erste Drehmoment kompensieren. Die kompensierenden Kräfte 41 und 43 wirken nun ebenfalls an den Kontaktbereichen 59 und 61. Während der Bewegung der Aufzugkabine 5 verteilt sich diese Belastung gleichmäßig über die gesamte Lauffläche der ersten Rollen 45 und 47. Bei ruhender Aufzugkabine (z.B. während eines Haltes oder in einer nächtlichen Parkposition) wirkt die Belastung dagegen über einen längeren Zeitraum auf den gleichen Kontaktbereich 59 bzw. 61. Dies führt zu einer plastischen Verformung der Rollen 45 und 47, insbesondere wenn diese an der Lauffläche ein weiches, dämpfendes Material aufweisen.

Figur 5 zeigt in analoger Darstellung eine Aufzugkabine 5 mit einer ersten Ausgleichseinrichtung 63 und einer zweiten Ausgleichseinrichtung 65. Die erste Ausgleichseinrichtung 63 beaufschlagt die Führungsschiene 3 mit einer Kraft 67 und die zweite Ausgleichseinrichtung 65 beaufschlagt die Führungsschiene 3 mit einer Kraft 69. Somit wirken die entsprechenden Gegenkräfte auf die Aufzugkabine 5, an der sich die Ausgleichseinrichtungen 63 und 69 abstützen. Die Gegenkräfte erzeugen ein zweites Drehmoment. Das zweite Drehmoment kompensiert vorliegend das erste Drehmoment weitgehend, so dass es nicht zu einem Verkippen der Aufzugkabine 5 kommt und die erste Rolle 45 des ersten Rollenpaares 29 weitgehend entlastet ist. Auf die erste Rolle 45 wirkt allerdings weiterhin die, in Bezug auf Figur 3 erläuterte Vorspannung. Entsprechend ist auch die erste Rolle 47 des zweiten Rollenpaares 31 aufgrund der zweiten Ausgleichseinrichtung 65 weitgehend entlastet.
Die Ausgleichseinrichtungen 63 und 65 umfassen vorliegend jeweils ein Stützelement 71, eine Steuereinheit 73, einen Aktor 75 und ein Kontaktelement 75. Über die jeweilige Steuereinheit 73 stehen die beiden Ausgleichseinrichtungen 63 und 65 mit einer Aufzugsteuerung 79 in Signalverbindung. Die Signalverbindung ist durch die gestrichelte Linie angedeutet.

Bei Halt der Aufzugkabine 5 sendet die Aufzugsteuerung 79 ein Signal an die erste Ausgleichseinrichtung 63 und die zweite Ausgleichseinrichtung 65. Das Signal wird von den Steuereinheiten 73 verarbeitet. Diese steuern die beiden Aktoren 75 an, die sich daraufhin um einen Stellweg ausdehnen. Somit erzeugen der Aktor 75 der ersten Ausgleichseinrichtung 63 eine Kraft 67 und der Aktor 75 der zweiten Ausgleichseinrichtung 65 eine Kraft 69. Die beiden Kräfte 65 und 67 wirken über die Kontaktelemente 77 auf die Führungsschiene 3. Folglich wirken entsprechende Gegenkräfte auf die Stützelemente 71. Die beiden Gegenkräfte erzeugen zusammen ein zweites Drehmoment, das das erste Drehmoment weitgehend kompensiert, so dass die erste Rolle 45 des ersten Rollenpaares 29 und die erste Rolle 47 des zweiten Rollenpaares 31 weitgehend entlastet sind.

Bei einer ebenfalls dargestellten Variante weist die erste Rolle 45 des ersten Rollenpaares 29 einen Sensor 50 zur Bestimmung der über die erste Rolle 45 übertragenen Kraft auf. Auf diese Weise kann direkt gemessen werden, ob eine erfolgreiche Entlastung der ersten Rolle 45 stattfindet. Zusätzlich zu einer reinen Überprüfung kann das Sensorsignal auch zur Regelung der Kraft verwendet werden. Hierzu umfasst die erste Ausgleichseinrichtung eine Steuereinheit 73, die mit dem Sensor 50 in Signalverbindung steht, um aus dem Signal des Sensors 50 ein Steuersignal für die Ausgleichseinrichtung 63 zu generieren. Beispielsweise wird der Stellweg des Aktors 75 solange vergrößert bis die erste Rolle 45 vollständig entlastet ist. Die Signalverbindung ist in Figur 5 durch die gestrichelte Linie angedeutet.

Vor der Weiterfahrt der Aufzugkabine 5 sendet die Aufzugsteuerung 79 ein Signal an die erste Ausgleichseinrichtung 63 und die zweite Ausgleichseinrichtung 65. Das Signal wird von den Steuereinheiten 73 verarbeitet. Diese ziehen sich daraufhin um einen Stellweg zusammen bis die Führungsschiene 3 keinen Kontakt mehr zu den Kontaktelementen 77 aufweist. Die Kräfte werden wieder wie in Figur 4 dargestellt über die erste Rolle 45 des ersten Rollenpaares 29 und die erste Rolle 47 des zweiten Rollenpaares 31 aufgenommen. Diese Konfiguration ist in Figur 6 dargestellt. In diesem Zustand bewegt sich die Aufzugkabine 5 entlang der Führungsschiene 3.

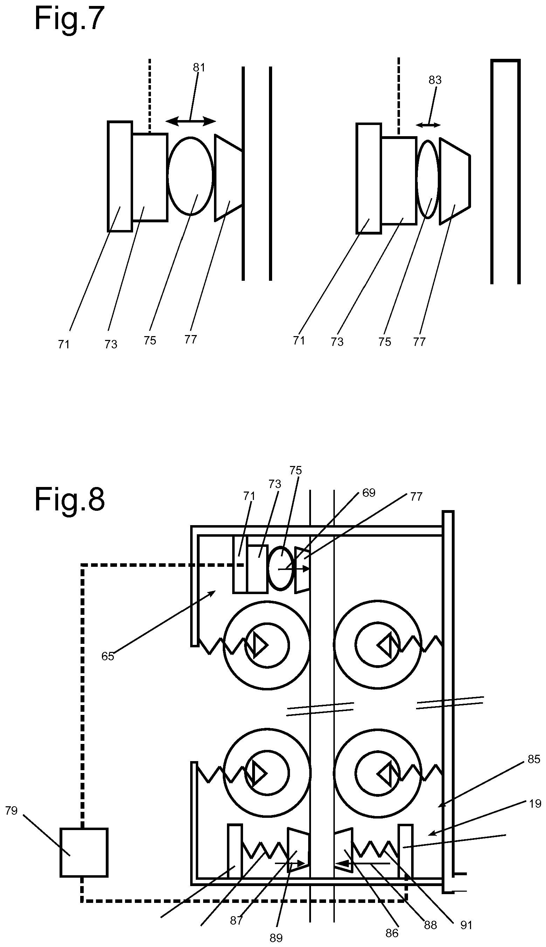

Figur 7 zeigt ein vergrößerte Darstellung der Ausgleichseinheit 63 im aktivierten Zustand (links) und im deaktivierten Zustand (rechts). Im aktivierten Zustand hat der Aktuator 75 eine erste Ausdehnung 81 in Stellrichtung. Im deaktivierten Zustand hat der Aktuator 75 eine zweite Ausdehnung 83 in Stellrichtung. Die die Differenz zwischen erste Ausdehnung 81 und zweiter Ausdehnung 83 wird als Stellweg des Aktuators bezeichnet.

Figur 8 zeigt eine Variante der Erfindung, bei der Vorrichtung 19 als eine Feststellbremse 85 ausgeführt ist. Außerdem ist in diesem Fall die erste Ausgleichseinrichtung 63 in die Feststellbremse 85 integriert. Die Feststellbremse 85 weist zwei Bremsbacken 86 und 87 auf. Die erste Bremsbacke 86 ist auf der gleichen Seite der Führungsschiene angeordnet wie die erste Rolle 45 des ersten Rollenpaares 29. Die erste Bremsbacke 86 ist über ein elastisches Element 91 mit einer Fassung 93 verbunden. Bei aktiver Feststellbremse üben die beiden Bremsbacken 86 und 87 von entgegengesetzten Seiten an der gleichen Vertikalposition auf die Führungsschiene 3 entgegengesetzte Andrückkräfte 88 und 89 aus. Dabei ist die Andrückkraft 88 größer als die Andrückkraft 89, so dass eine resultierende Kraft verbleibt, die das zweite Drehmoment bewirkt. Damit die kompensierende Kraft bei dieser Ausgestaltung zwischen Führungsschiene 3 und Tragrahmen 7l im Wesentlichen über die Bremsbacke 86 und nicht über die erste Rolle 45 übertragen wird, weist das elastische Element 91 eine höhere Steifigkeit auf als das elastische Verbindungsglied 55a. Die zweite Ausgleichseinrichtung 65 ist analog zu den vorherigen Figuren aufgebaut.

Die Feststellbremse 85 steht ebenfalls mit der Aufzugsteuerung 79 in Signalverbindung. Die Feststellbremse 85 kann verwendet werden, um die Aufzugkabine aus ihrer Fahrt abzubremsen oder auch nur um die abgebremste Aufzugkabine in der Ruheposition zu halten.

**Bezugszeichenliste**

| | |
|---|---|
| Aufzuganlage | 1 |
| Führungsschiene | 3 |
| Aufzugkabine | 5 |
| Tragrahmen | 7 |
| Innenkabine | 9 |
| Dämpfungselemente | 11 |
| Gewichtssensor | 13 |
| Nutzlast | 15 |
| Gewichtskraft (Nutzlast) | 17 |
| Vorrichtung | 19 |
| Haltekraft | 21 |
| Tragseil | 23 |
| Angriffspunkt Haltekraft | 25 |
| Schwerpunkt | 27 |
| erstes Rollenpaar | 29 |
| zweites Rollenpaar | 31 |
| Rollengehäuse | 32 |
| Gewichtskraft (Gesamt) | 33 |
| Gewichtskraft (leere Aufzugkabine) | 35 |
| Schwerpunkt (leere Aufzugkabine) | 37 |
| Schwerpunkt (Nutzlast) | 39 |
| kompensierende Kräfte | 41 |
| kompensierende Kräfte | 43 |
| erste Rolle (des ersten Rollenpaares) | 45 |
| zweite Rolle (des ersten Rollenpaares) | 46 |
| erste Rolle (des zweiten Rollenpaares) | 47 |
| zweite Rolle (des zweiten Rollenpaares) | 48 |
| Linearmotor | 49 |
| Sensor | 50 |
| stationäre Komponente | 51 |
| mobile Komponente | 53 |
| Elastisches Verbindungsglied | 55a, b, c, d |
| Halterung | 57 |
| Elastomerbeschichtung | 58 |
| Durch Last verformter Kontaktbereich | 59 |
| Durch Last verformter Kontaktbereich | 61 |
| erste Ausgleichseinrichtung | 63 |
| zweite Ausgleichseinrichtung | 65 |
| Kraft | 67 |
| Kraft | 69 |
| Stützelement | 71 |
| Steuereinheit | 73 |
| Aktor | 75 |
| Kontaktelement | 77 |
| Aufzugsteuerung | 79 |
| erste Ausdehnung | 81 |
| zweite Ausdehnung | 83 |
| Feststellbremse | 85 |
| Bremsbacke | 86 |
| Bremsbacke | 87 |
| Andrückkraft | 88 |
| Andrückkraft | 89 |
| Elastisches Element | 91 |
| Fassung | 93 |

## Patentansprüche

1. Aufzuganlage (1) mit einer entlang einer Führungsschiene (3) beweglichen Aufzugkabine (5) umfassend mindestens ein erstes Rollenpaar (29) und ein zweites Rollenpaar (31), wobei die Führungsschiene (3) zwischen den beiden Rollen (45, 46) des ersten Rollenpaares (29) verläuft, wobei die Führungsschiene (3) zwischen den beiden Rollen (47, 48) des zweiten Rollenpaares (31) verläuft, und wobei die Aufzugsanlage eine Vorrichtung (19) aufweist, um die Aufzugkabine (5) mit einer Haltekraft (21) zu beaufschlagen, wobei zwischen dem Angriffspunkt (25) der Haltekraft (21) und dem Schwerpunkt der Aufzugkabine (37) ein horizontaler Versatz vorliegt, so dass ein erstes Drehmoment auf die Aufzugkabine (5) wirkt, **dadurch gekennzeichnet, dass** die Aufzugkabine (5) mindestens eine erste Ausgleichseinrichtung (63) aufweist, um bei ruhender Aufzugkabine (5) die Führungsschiene (3) derart mit einer Kraft zu beaufschlagen, dass sich ein zweites Drehmoment ergibt, das das erste Drehmoment weitgehend kompensiert, so dass eine erste Rolle (45) des ersten Rollenpaares (29) bei ruhender Aufzugkabine (5) weitgehend entlastet ist und wobei die Vorrichtung eine Feststellbremse (85) aufweist, in die die erste Ausgleichseinrichtung integriert ist.

2. Aufzuganlage nach Anspruch 1, **dadurch gekennzeichnet, dass** die Ausgleichseinrichtung (63) mindestens einen Aktor (75) zur Erzeugung der Kraft umfasst.

3. Aufzugsanlage nach Anspruch 2, **dadurch gekennzeichnet, dass** die erste Rolle (45) des ersten Rollenpaares (29 über ein elastisches Verbindungsglied (55a) mit einer Halterung (57) verbunden ist und der Aktor (75) einen vordefinierten Stellweg aufweist, der an die Steifigkeit des elastischen Verbindungsgliedes (55a) angepasst ist.

4. Aufzuganlage nach Anspruch 2, **dadurch gekennzeichnet, dass** der Stellweg des Aktors (75) regelbar ist.

5. Aufzuganlage nach einem der Ansprüche 1-4, **dadurch gekennzeichnet, dass** die Feststellbremse (85) zwei Bremsbacken (86, 87) aufweist, die bei aktiver Feststellbremse (85) von entgegengesetzten Seiten an der gleichen Vertikalposition auf die Führungsschiene (3) entgegengesetzte Andrückkräfte ausüben, wobei die zwei Bremsbacken (86, 87) mit unterschiedlichen Andrückkräften auf die Führungsschiene (3) wirken, so dass die Kraft als resultierende Kraft der beiden unterschiedlichen Andrückkräfte verbleibt.

6. Aufzuganlage nach Anspruch 5, **dadurch gekennzeichnet, dass** die erste Rolle über ein elastisches Verbindungsglied mit einer Halterung verbunden ist, eine erste Bremsbacke (86) der zwei Bremsbacken (86, 87) auf der gleichen Seite der Führungsschiene (3) angeordnet ist wie die erste Rolle (45), die erste Bremsbacke (86) über ein elastisches Element (91) mit einer Fassung (93) verbunden ist und das elastische Element (93) eine höhere Steifigkeit aufweist als das elastische Verbindungsglied (55a).

7. Aufzuganlage nach einem der Ansprüche 1-6 **dadurch gekennzeichnet, dass** die Aufzuganlage eine Aufzugsteuerung (79) umfasst und die Ausgleichseinrichtung (63) mit der Steuerung (79) in Signalverbindung steht.

8. Aufzuganlage nach Anspruch 1 bis 7, **dadurch gekennzeichnet, dass** die Aufzugkabine (5) einen Tragrahmen (7) und eine Innenkabine (9) umfasst, wobei zwischen der Innenkabine (9) und dem Tragrahmen (7) mindestens ein Gewichtssensor (13) zur Bestimmung der Gewichtskraft der Aufzugkabine angeordnet ist.

9. Aufzuganlage nach Anspruch 8, **dadurch gekennzeichnet, dass** die erste Ausgleichseinrichtung (63) eine Steuereinheit aufweist, die mit dem Gewichtssensor in Signalverbindung steht, um aus dem Signal des Gewichtssensors (13) ein Steuersignal für die Ausgleichseinrichtung (63) zu generieren.

10. Aufzuganlage nach Anspruch 1 bis 6, **dadurch gekennzeichnet, dass** die erste Rolle einen Sensor (50) zur Bestimmung der über die erste Rolle (45) übertragenen Kraft aufweist.

11. Aufzuganlage nach Anspruch 10, **dadurch gekennzeichnet, dass** die erste Ausgleichseinrichtung (63) eine Steuereinheit (73) umfasst, die mit dem Sensor (50) Signalverbindung steht, um aus dem Signal des Sensors (50) ein Steuersignal für die Ausgleichseinrichtung (63) zu generieren.

12. Aufzuganlage nach einem der Ansprüche 1 bis 11, **dadurch gekennzeichnet, dass** die Aufzugkabine eine zweite Ausgleichseinrichtung (65) aufweist, um bei ruhender Aufzugkabine (5) die Führungsschiene (3) derart mit einer Kraft zu beaufschlagen, dass sich ein zweites Drehmoment ergibt, das das erste Drehmoment weitgehend kompensiert, so dass mindestens eine erste Rolle (47) des zweiten Rollenpaares (31) bei ruhender Aufzugkabine weitgehend entlastet ist,
wobei die erste Ausgleichseinrichtung (63) und die zweite Ausgleichseinrichtung (65) einen vertikalen Versatz zueinander aufweisen.

13. Aufzuganlage nach Anspruch 12, **dadurch gekennzeichnet, dass** die beiden Ausgleichseinrichtungen (63, 65) derart angeordnet sind, dass die Kräfte, mit denen die Ausgleichseinrichtungen (63, 65) die Führungsschiene (3) beaufschlagen können, entgegengerichtet sind.

## Claims

1. Lift installation (1) having a lift car (5) which can be moved along a guide rail (3), comprising at least a first pair of rollers (29) and a second pair of rollers (31), wherein the guide rail (3) runs between the two rollers (45, 46) of the first pair of rollers (29), wherein the guide rail (3) runs between the two rollers (47, 48) of the second pair of rollers (31), and wherein Lift installation has an apparatus (19) for subjecting the lift car (5) to a retaining force (21), wherein there is a horizontal offset between the point (25) at which the retaining force (21) takes effect and the center of gravity of the lift car (37), and therefore the lift car (5) is subjected to a first torque, **characterized in that** the lift car (5) has at least a first compensating device (63) so that, when the lift car (5) is at rest, the guide rail (3) is subjected to sufficient force to give rise to a second torque, which largely compensates for the first torque, so that a first roller (45) of the first pair of rollers (29) is largely relieved of loading when the lift car (5) is at rest and wherein the apparatus comprises a parking brake (85), in which the first compensating device is integrated.

2. Lift installation according to Claim 1, **characterized in that** the compensating device (63) comprises at least one actuator (75) to generate the force.

3. Lift installation according to Claim 2, **characterized in that** the first roller (45) of the first pair of rollers (29) is joined by an elastic connection element (55a) to a mounting (57) and the actuator (75) has a predefined travel which is adapted to the stiffness of the elastic connection element (55a).

4. Lift installation according to Claim 2, **characterized in that** the travel of the actuator (75) is adjustable.

5. Lift installation according to one of Claims 1-4, **characterized in that** the parking brake (85) comprises two brake shoes (86, 87), which when the parking brake (85) is active apply opposing pressing forces from opposite sides against the same vertical position on the guide rail (3), wherein the two brake shoes (86, 87) act with different pressing forces on the guide rail (3), so that the force remains as the resultant force of the two different pressing forces.

6. Lift installation according to Claim 5, **characterized in that** the first roller is connected by an elastic connection element to a mounting, a first brake shoe (86) of the two brake shoes (86, 87) is arranged on the same side of the guide rail (3) as the first roller (45), the first brake shoe (86) is connected by an elastic element (91) to a frame (93) and the elastic element (93) has greater stiffness than the elastic connection element (55a).

7. Lift installation according to one of Claims 1-6, **characterized in that** Lift installation comprises lift controls (79) and the compensating device (63) is in signal communication with the controls (79).

8. Lift installation according to Claim 1 to 7, **characterized in that** the lift car (5) comprises a load-bearing frame (7) and an interior car (9), wherein between the interior car (9) and the load-bearing frame (7) there is arranged at least one weight sensor (13) for determining the weight of the lift car.

9. Lift installation according to Claim 8, **characterized in that** the first compensating device (63) comprises a control unit, which stands in signal communication with the weight sensor in order to generate from the signal of the weight sensor (13) a control signal for the compensating device (63).

10. Lift installation according to Claim 1 to 6, **characterized in that** the first roller comprises a sensor (50) for determining the force transmitted across the first roller (45).

11. Lift installation according to Claim 10, **characterized in that** the first compensating device (63) comprises a control unit (73), which stands in signal communication with the sensor (50) in order to generate from the signal of the sensor (50) a control signal for the compensating device (63).

12. Lift installation according to one of Claims 1 to 11, **characterized in that** the lift car comprises a second compensating device (65) in order to apply a force to the guide rail (3) when the lift car (5) is at rest so that a second torque is produced, which largely compensates for the first torque, so that at least a first roller (47) of the second pair of rollers (31) is largely relieved of loading when the lift car is at rest, wherein the first compensating device (63) and the second compensating device (65) have a vertical offset from each other.

13. Lift installation according to Claim 12, **characterized in that** the two compensating devices (63, 65) are arranged so that the forces which the compensating devices (63, 65) can apply to the guide rail (3) are directed opposite each other.

## Revendications

1. Installation d'ascenseur (1) présentant une cabine d'ascenseur (5) déplacée le long d'un rail de guidage (3), au moins une première paire (29) de galets et une deuxième paire (31) de galets, le rail de guidage (3) s'étendant entre les deux galets (45, 46) de la paire (31) de galets, le rail de guidage (3) s'étendant entre les deux galets (47, 48) de la paire (31) de galets, l'installation s'ascenseur présentant un ensemble (19) qui applique sur la cabine d'ascenseur (5) une force de maintien (21), un décalage horizontal étant prévu entre le point d'action (25) de la force de maintien (21) et le centre de gravité de la cabine d'ascenseur (37) de telle sorte qu'un premier couple de rotation agisse sur la cabine d'ascenseur (5),
**caractérisée en ce que**
la cabine d'ascenseur (5) présente au moins un premier dispositif de compensation (63) qui, lorsque la cabine d'ascenseur (5) est au repos, applique sur le rail de guidage (3) une force telle qu'il en résulte un deuxième couple de rotation qui compense largement le premier couple de rotation, de telle sorte qu'un premier galet (45) de la première paire (29) de galets soit largement délesté lorsque la cabine d'ascenseur (5) est au repos, l'ensemble présentant un frein d'immobilisation (85) dans lequel est intégré le premier dispositif de compensation.

2. Installation d'ascenseur selon la revendication 1, **caractérisée en ce que** le dispositif de compensation (63) comporte au moins un actionneur (75) qui délivre la force.

3. Installation d'ascenseur selon la revendication 2, **caractérisée en ce que** le premier galet (45) de la première paire (29) de galets est relié à un support (57) par l'intermédiaire d'un premier organe élastique de liaison (55a), l'actionneur (75) présentant un parcours de réglage prédéfini adapté à la rigidité du premier organe élastique de liaison (55a).

4. Installation d'ascenseur selon la revendication 2, **caractérisée en ce que** le parcours de réglage de l'actionneur (75) est réglable.

5. Installation d'ascenseur selon l'une des revendications 1 à 4, **caractérisée en ce que** le frein d'immobilisation (85) présente deux mâchoires de frein (86, 87) qui, lorsque le frein d'immobilisation (85) est activé, exerce des forces de poussée opposées sur le rail de guidage (3) sur des côtés opposés de la même position verticale, les deux mâchoires de frein (86, 87) agissant sur le rail de guidage (3) avec des forces de poussée différentes de telle sorte que la force qui résulte ses deux forces de poussée différentes reste comme force résultante.

6. Installation d'ascenseur selon la revendication 5, **caractérisée en ce que** le premier galet est relié à un support par un organe élastique de liaison, **en ce qu'**une première mâchoire de frein (86) des deux mâchoires de frein (86, 87) est disposée sur le même côté du rail de guidage (3) que le premier galet (45), **en ce que** la première mâchoire de frein (86) est reliée par un élément élastique (91) à une monture (93) et **en ce que** l'élément élastique (93) présente une rigidité plus élevée que le premier organe élastique de liaison (55a) .

7. Installation d'ascenseur selon l'une des revendications 1 à 6, **caractérisée en ce que** l'installation d'ascenseur comporte une commande d'ascenseur (79) et **en ce que** le premier dispositif de compensation (63) est relié à la commande (79) pour échange de signaux.

8. Installation d'ascenseur selon l'une des revendications 1 à 7, **caractérisée en ce que** la cabine d'ascenseur (5) comporte un bâti de support (7) et une cabine intérieure (9), au moins un capteur de poids (13) qui détermine la force du poids de la cabine d'ascenseur étant disposé entre la cabine intérieure (9) et le bâti de support (7).

9. Installation d'ascenseur selon la revendication 8, **caractérisée en ce que** le premier dispositif de compensation (63) présente une unité de commande qui est reliée au capteur de poids pour échange de signaux pour générer à partir du signal du capteur de poids (13) un signal de commande pour le premier dispositif de compensation (63).

10. Installation d'ascenseur selon l'une des revendications 1 à 6, **caractérisée en ce que** le premier galet présente un capteur (50) qui détermine la force transmise par l'intermédiaire du premier galet (45).

11. Installation d'ascenseur selon la revendication 10, **caractérisée en ce que** le premier dispositif de compensation (63) comporte une unité de commande (73) qui est reliée au capteur (50) pour échange de signaux pour générer à partir du signal du capteur (50) un signal de commande du premier dispositif de compensation (63).

12. Installation d'ascenseur selon l'une des revendications 1 à 11, **caractérisée en ce que** la cabine d'ascenseur présente un deuxième dispositif de compensation (65) qui lorsque la cabine d'ascenseur (5) est au repos, applique sur le rail de guidage (3) une force telle qu'il en résulte un deuxième couple de rotation qui compense largement le premier couple de rotation, de telle sorte qu'au moins un premier galet (47) de la paire (31) de galets soit largement délesté lorsque la cabine d'ascenseur est au repos, le premier dispositif de compensation (63) et le deuxième dispositif de compensation (65) présentant l'un par rapport à l'autre un décalage vertical.

13. Installation d'ascenseur selon la revendication 12, **caractérisée en ce que** les deux dispositifs de compensation (63, 65) sont disposés de telle sorte que les forces que les dispositifs de compensation (63, 65) peuvent appliquer sur le rail de guidage (3) sont orientées dans des sens opposés.
